# EUROPEAN PATENT APPLICATION

(11) **EP 2 962 571 A1**
(43) Date of publication of application: **06.01.2016**
(21) Application number: 15174989.2
(22) Date of filing: 02.07.2015
(51) Int. Cl.: A21D 2/18, A21D 2/36, A21D 13/06

(54) **GLUTEN-FREE BAKERY PRODUCT AND METHOD OF PRODUCTION**

(30) Priority: 02.07.2014 IT UD20140116
(71) Applicant: Friulbaker S.r.l., 33100 Udine (IT)
(72) Inventor: Sacilotto, Maurizio, 33038 San Daniele del Friuli (IT)
(74) Representative: Fabro., Lorenzo

(57) **Abstract**

A gluten-free bakery product is obtained from a dough for short-crust pastry, without sources of gluten and comprising one or more vegetable fibers, starch and/or cereal flour without gluten, water and fat phase.

## Description

### FIELD OF THE INVENTION

Forms of embodiment described here concern a gluten-free bakery product, a corresponding production method and a dough to make the bakery product.

### BACKGROUND OF THE INVENTION

It is known that the proteins of cereals can be classified in four fractions according to their solubility: albumins, globulins, prolamins and glutelins, the latter two of which form gluten. Prolamins are present not only in wheat, but also in other cereals such as oats, barley, rye, spelt, kamut, spelt flour and triticum.

In bakery products, including bread, biscuits, cakes, pastries and pasta, common wheat flour is traditionally the main ingredient that gives mass and structure and allows to form the dough when mixed with water at room temperature.

In wheat dough for leavened bakery products, gluten allows to retain the gas produced during fermentation and the fractions with highest molecular weight of gluten help in the formation of a more elastic structure, for example in bread or bakery products in general. A flour with an adequate concentration of gluten can absorb a large quantity of water to obtain an elastic dough with high capacity to retain the carbon dioxide, creating a good protein reticulation.

It is also known that celiac disease, that is, the permanent intolerance to gluten, is one of the most common food intolerances which affect the small intestine. In those who suffer from this intolerance, eating food that contains gluten causes an immune reaction in the small intestine, giving rise to a chronic inflammation that causes the intestinal villi to disappear, accompanied by symptoms that vary from case to case. The flattened absorbent surface reduces or prevents the absorption of nutritional substances such as proteins, fats, carbohydrates, vitamins and mineral salts, causing malnutrition and deficiencies.

A rigorously gluten-free diet is the only way to effectively cure gluten intolerance. Celiac sufferers can cover their need for nutrients with foods that are naturally gluten-free, such as meat, fish, fruit, vegetables, eggs, milk, potatoes or rice, and take in the missing nutrients with gluten-free dietary products and food supplements available on the market.

Bakery products and pasta are foods that supply the greatest contribution of carbohydrates in the diet, which are very important nutritionally for a balanced diet. It is important to improve the quality of gluten-free bakery products and pasta to increase consumption and promote the diffusion of a more balanced diet among celiac sufferers.

In general, the purpose of gluten is to combine cohesion and elasticity of the dough in a bakery product, conferring structure so as to facilitate workability and confer texture on the finished product. Therefore, in many cases the sensory and texture properties of gluten-free bakery products are limited/reduced compared with bakery products obtained with wheat flour as the main ingredient. The absence of gluten in doughs leads to unworkable, liquid-viscous compounds and to unstructured bakery products, very distant in quality on an organoleptic level from traditional wheat products.

To obtain satisfactory properties in gluten-free bakery products, usually a lot of thickening ingredients and additives are required, in particular structuring and/or reticulating chemical additives. These are needed in order to give texture to the dough, and consequently consistency to the finished product after cooking. For example, this use of thickening ingredients and structuring and/or reticulating chemical additives is very common in the preparation of short-crust pastry products obtained from a short-crust pastry dough, in particular gluten-free, precisely so as to compensate for the lack of gluten and connected structuring effects. However, in general these thickening ingredients and additives are often undesirable in a recipe.

Document CA-A-2.786.392 describes allergen-free compositions, such as flour or doughs, and bakery products made without eggs or other allergens. However, this document does not describe compositions for short-crust pastry, nor short-crust pastry bakery products. Furthermore, the compositions described in CA-A-2.786.392 comprise chemical additives, in particular reticulating and/or structuring additives, such as gum arabic, xanthan gum, guar gum, agar-agar gum, gelatin, cellulose, pectin and carob seed flour which in any case cause the disadvantages described above.

Documents US-A-2010/015279, WO-A-2012/115782, WO-A-2013/043658, WO-A-2011/062507, US-A-2007/160728, US-A-2011/045146 and US-A-2009/181147 also provide formulas, doughs and bakery products which include reticulating and/or structuring chemical additives of the type described above.

There is therefore a need to perfect a gluten-free bakery product and a corresponding method of production, and also a dough to make the bakery product, which can overcome at least one of the disadvantages of the state of the art.

In particular, one purpose of the present invention is to supply a gluten-free bakery product, therefore suitable for celiac sufferers, and to perfect a corresponding method of production, and to provide a corresponding dough to make said bakery product, which has satisfactory properties in terms of sensory qualities, taste, palatability and texture.

Another purpose of the present invention is that the dough by means of which the bakery product is made must have a behavior and function similar to wheat doughs with gluten.

In particular, one purpose is to provide a recipe for a dough whose ingredients have the capacity to reticulate the dough with the right proportion of plasticizers (for example water), the right temperature and the right quantity of mechanical energy transferred during kneading. In particular, it is fundamental that the dough thus obtained has rheological characteristics similar to those of a dough made with wheat flour, such as elasticity, strength, viscosity and stability during the kneading phase. All this while avoiding the use of thickeners and structuring and/or reticulating chemical additives that are present in most gluten-free bakery products available on the market.

Another purpose is to give taste, aromas and colors to the finished gluten-free bakery product which are similar to those of comparable traditional products with wheat flour.

Another purpose is that the ingredients of the dough have a natural and vegetable origin, suitable for celiac sufferers and available in great quantities.

Another purpose is to provide a gluten-free bakery product that has a long shelf-life without being attacked by bacteria, yeasts, molds, spores or microorganisms in general.

The Applicant has devised, tested and embodied the present invention to overcome the shortcomings of the state of the art and to obtain these and other purposes and advantages.

Unless otherwise defined, all the technical and scientific terms used here and hereafter have the same meaning as commonly understood by a person with ordinary experience in the field of the art to which the present invention belongs. Even if methods and materials similar or equivalent to those described here can be used in practice and in the trials of the present invention, the methods and materials are described hereafter as an example. In the event of conflict, the present application shall prevail, including its definitions. The materials, methods and examples have a purely illustrative purpose and shall not be understood restrictively.

### SUMMARY OF THE INVENTION

The present invention is set forth and characterized in the independent claims, while the dependent claims describe other characteristics of the invention or variants to the main inventive idea.

According to some forms of embodiment, a gluten-free bakery product is provided, obtained from a dough for short-crust pastry. According to one form of embodiment, the short-crust pastry dough is without sources of gluten and without reticulating and/or structuring chemical additives and comprises at least:
- a mixture of vegetable fibers, between 3% and 10% with respect to the weight of the short-crust pastry dough, wherein said vegetable fibers are chosen from two or more of legume fiber, potato fiber, millet fiber and linseed fiber;
- a mixture of cornstarch, potato starch and rice flour;
- water;
- fat phase consisting of vegetable oil.

According to other forms of embodiment, a dough for short-crust pastry is provided to make gluten-free bakery products. According to one form of embodiment, the short-crust pastry dough is without sources of gluten and without reticulating and/or structuring chemical additives and comprises at least:
- a mixture of vegetable fibers, between 3% and 10% with respect to the weight of the short-crust pastry dough, wherein said vegetable fibers are chosen from two or more of legume fiber, potato fiber, millet fiber and linseed fiber;
- a mixture of cornstarch, potato starch and rice flour;
- water;
- fat phase consisting of vegetable oil.

According to other forms of embodiment, a method to make a gluten-free bakery product is provided. According to one form of embodiment, the method provides to make a dough for short-crust pastry without sources of gluten and without reticulating and/or structuring chemical additives which comprises at least:
- a mixture of vegetable fibers, between 3% and 10% with respect to the weight of the short-crust pastry dough, wherein said vegetable fibers are chosen from two or more of legume fiber, potato fiber, millet fiber and linseed fiber
- a mixture of cornstarch, potato starch and rice flour;
- water;
- fat phase consisting of vegetable oil.
   wherein the method also provides:
- to shape said short-crust pastry dough,
- to bake said shaped short-crust pastry dough to achieve said bakery product.

These and other aspects, characteristics and advantages of the present disclosure will be better understood with reference to the following description, drawings and attached claims. The description shows some forms of embodiment of the present invention and is intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### DETAILED DESCRIPTION OF SOME FORMS OF EMBODIMENT

We shall now refer in detail to the various forms of embodiment of the present invention, of which one or more examples are supplied and described. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

Before describing these forms of embodiment, we must also clarify that the present description is not limited in its application to details of the construction and disposition of the components as described in the following description using the attached drawings. The present description can provide other forms of embodiment and can be obtained or executed in various other ways. We must also clarify that the phraseology and terminology used here is for the purposes of description only, and cannot be considered as limitative. The use of terms such as "including", "comprising", "having" and their variations is intended to include the elements listed after them and their equivalents, and also additional elements.

All the percentages and ratios indicated refer to the weight of the total composition (for example indicated as % w/w), unless otherwise indicated. All the measurements are made, unless otherwise indicated, at 25°C and atmospheric pressure. All the temperatures, unless otherwise indicated, are expressed in degrees Centigrade.

All the intervals reported here shall be understood to include the extremes, including those that report an interval "between" two values. Furthermore, all the intervals reported here shall be understood to include and describe the punctual values included therein, and also all the sub-intervals. Moreover, all the intervals are intended as such that the sum of the values comprised therein, in the final composition, gives 100%, in particular considering that the person of skill will know how to choose the values of the intervals so that the sum does not exceed 100%.

Terms such as "about", "generally", "substantially" and suchlike shall be understood with their function of modifying a term or value that is not absolute, but is not reported in the state of the art. Such terms shall be defined by the specific circumstances and by the terms that they are intended to modify according to the common acceptance of such terms in the specific field. They shall take into account at least the degree of experimental error expected, the technical error and the instrumental error for a given technique adopted to measure a value. Unless otherwise indicated, in the present description, singular forms such as "a", "an" and "one" shall be understood to include plural forms, unless the context suggests otherwise.

Forms of embodiment described here concern a gluten-free bakery product obtained from a short-crust pastry dough. The short-crust pastry dough has no sources of gluten and no structuring and/or reticulating chemical additives and includes:
- one or more vegetable fibers;
- gluten-free starch and/or cereal flour;
- water;
- fat phase.

In particular, the structuring and/or reticulating chemical additives missing from the dough are chosen from a group that comprises: xanthan gum, guar gum, agar-agar gum, gelatin, cellulose, pectin and carob seed flour, gum arabic, semisynthetic hydrophilic colloids.

Advantageously, the one or more vegetable fibers used in the dough described here are one or more natural reticulating vegetable fibers, that is, able to provide the reticulation capacity and structure to the dough, even in the absence of gluten and other structuring and/or reticulating chemical additives.

In some forms of embodiment, which can be combined with all the forms of embodiment described here, the vegetable fibers can be comprised between 3% and 10% w/w with respect to the weight of the short-crust pastry dough, in particular between 4% and 8% w/w, more in particular between 5% and 7% w/w. Examples of quantities of vegetable fibers in the short-crust pastry dough are 4.5% w/w, 4.8% w/w, 5% w/w, 5.2% w/w, 5.5% w/w, 5.8% w/w, 6% w/w, 6.2% w/w, 6.5% w/w, 6.8% w/w, 7% w/w.

In some forms of embodiment, which can be combined with all the forms of embodiment described here, the vegetable fibers can be chosen from one or more of legume fiber, potato fiber, millet fiber and linseed fiber, taken individually or in a mixture. For example, the vegetable fibers can comprise a mixture of vegetable fibers. As we said, advantageously the vegetable fibers provide the desired reticulation capacity and hence structure to the final dough.

In possible implementations, the vegetable fibers can comprise a mixture of two, more or all the legume fiber, potato fiber, millet fiber and linseed fiber. Advantageously, the vegetable fibers chosen can provide a reticulation effect that substitutes the reticulation effect provided by the gluten in the commonly used wheat flour, or the structuring and/or reticulating chemical additives commonly used in the state of the art, in particular in gluten-free products.

It is therefore possible to obtain a plastic and well-reticulated dough, strong and extendable, in particular thanks to the provision of the vegetable fibers. In fact, a protein reticulation is obtained that gives a good result in the extendability of the dough. Furthermore, the vegetable fibers chosen do not have unpleasant after-tastes for the consumer.

In possible implementations, the legume fiber can be comprised between 35% and 45% w/w with respect to the weight of the vegetable fibers, in particular between 38% and 44% w/w, more in particular between 40% and 43% w/w. Examples of quantities of legume fiber in the mixture of vegetable fibers are 39% w/w, 39.5% w/w, 40% w/w, 40.5% w/w, 41% w/w, 41.5% w/w, 42% w/w, 42.5% w/w, 43% w/w, 43.5% w/w, 44% w/w. For example, pea fiber can be used as legume fiber. An example of pea fiber is available from the French Company Sotexpro as Cellula 90/160 or Faba fibre 800.

In possible implementations, the potato fiber can be comprised between 25% and 35% w/w with respect to the weight of the mixture of vegetable fibers, in particular between 26% and 33% w/w, more in particular between 27% and 31% w/w. Examples of quantities of potato fiber in the mixture of vegetable fibers are 26% w/w, 26.5% w/w, 27% w/w, 27.5% w/w, 28% w/w, 28.5% w/w, 29% w/w, 29.5% w/w, 30% w/w, 30.5% w/w, 31% w/w. An example of potato fiber is available from the Danish Company KMC as FiberBind300 or FiberBind400.

In possible implementations, the millet fiber can be comprised between 15% and 25% w/w with respect to weight of the vegetable fibers, in particular between 16% and 23% w/w, more in particular between 17% and 21% w/w.

Examples of quantities of millet fiber in the mixture of vegetable fibers are 16% w/w, 16.5% w/w, 17% w/w, 17.5% w/w, 18% w/w, 18.5% w/w, 19% w/w, 19.5% w/w, 20% w/w, 20.5% w/w, 21% w/w.

In possible implementations, the linseed fiber can be comprised between 5% and 15% w/w with respect to weight of the mixture of vegetable fibers, in particular between 8% and 14% w/w, more in particular between 10% and 13% w/w. Examples of quantities of linseed fiber in the mixture of vegetable fibers are 9% w/w, 9.5% w/w, 10% w/w, 10.5% w/w, 11% w/w, 11.5% w/w, 12% w/w, 12.5% w/w, 13% w/w, 13.5% w/w, 14% w/w.

In some forms of embodiment, which can be combined with all the forms of embodiment described here, the gluten-free starch and/or cereal flour can be comprised between 35% and 40% w/w with respect to the weight of the short-crust pastry dough, in particular between 38% and 43% w/w, more in particular between 40% and 42% w/w. Examples of quantities of gluten-free starch and/or cereal flour in the short-crust pastry dough are 39% w/w, 39.5% w/w, 40% w/w, 40.5% w/w, 41% w/w, 41.5% w/w, 42% w/w, 42.5% w/w, 43% w/w, 43.5% w/w, 44% w/w.

In some forms of embodiment, which can be combined with all the forms of embodiment described here, the starch can be chosen from one or more of cornstarch and potato starch.

In the present description, the word "starch" is intended as carbon hydrate, which is a reserve material of the plants from which it is extracted and constitutes the majority of food carbohydrates: chemically it is a polymer of glucose, in particular consisting of a mixture of polymer chains of amylose (about 20%) and amylopectin (about 80%).

Moreover, in the present description, the term "potato starch" is intended as the starch which, in the form of white powder, insoluble in cold water, is generally made from rhizomes, tubers and the stems of various plants, in the cells of which it is contained in granules. Potato starch is therefore the starch taken from potato tubers.

In some forms of embodiment, which can be combined with all the forms of embodiment described here, the gluten-free cereal flour can be rice flour. Rice flour is a flour that is intrinsically gluten-free.

In some forms of embodiment, which can be combined with all the forms of embodiment described here, gluten-free starch and cereal flour can be provided that comprise a mixture of cornstarch, potato starch and rice flour. Advantageously, the mixture of cornstarch, potato starch and rice flour can functionally replace in the dough the functions of the amylaceous part of the wheat flour usually used in bakery products with gluten.

In some forms of embodiment, which can be combined with all the forms of embodiment described here, the cornstarch can be comprised between 15% and 25% w/w with respect to the weight of the short-crust pastry dough, in particular between 17% and 22% w/w, more in particular between 18% and 20% w/w. Examples of quantities of cornstarch in the short-crust pastry dough are 16% w/w, 16.5% w/w, 17% w/w, 17.5% w/w, 18% w/w, 18.5% w/w, 19% w/w, 19.5% w/w, 20% w/w, 20.5% w/w, 21% w/w.

In some forms of embodiment, which can be combined with all the forms of embodiment described here, the potato starch can be comprised between 5% and 15% w/w with respect to the weight of the short-crust pastry dough, in particular between 7% and 12% w/w, more in particular between 8% and 11% w/w. Examples of quantities of potato starch in the short-crust pastry dough are 7% w/w, 7.5% w/w, 8% w/w, 8.5% w/w, 9% w/w, 9.5% w/w, 10% w/w, 10.5% w/w, 11% w/w, 11.5% w/w, 12% w/w.

In some forms of embodiment, which can be combined with all the forms of embodiment described here, the rice flour can be comprised between 7% and 18% w/w with respect to the weight of the short-crust pastry dough, in particular between 9% and 15% w/w, more in particular between 11% and 13% w/w. Examples of quantities of rice flour in the short-crust pastry dough are 10% w/w, 10.5% w/w, 11% w/w, 11.5% w/w, 12% w/w, 12.5% w/w, 13% w/w, 13.5% w/w, 14% w/w, 14.5% w/w, 15% w/w.

In some forms of embodiment, which can be combined with all the forms of embodiment described here, the water can be comprised between 5% and 15% w/w with respect to the weight of the short-crust pastry dough, in particular between 7% and 12% w/w, more in particular between 8% and 10% w/w. Examples of quantities of water in the short-crust pastry dough are 7% w/w, 7.5% w/w, 8% w/w, 8.5% w/w, 9% w/w, 9.5% w/w, 10% w/w, 10.5% w/w, 11% w/w, 11.5% w/w, 12% w/w.

In some forms of embodiment, which can be combined with all the forms of embodiment described here, the fat phase consists of vegetable oil. In some forms of embodiment, the vegetable oil can be comprised between 9% and 18% w/w with respect to the weight of the short-crust pastry dough, in particular between 10% and 16% w/w, more in particular between 12% and 14% w/w. Examples of quantities of vegetable oil in the short-crust pastry dough are 12% w/w, 12.5% w/w, 13% w/w, 13.5% w/w, 14% w/w, 14.5% w/w, 15% w/w.

In some forms of embodiment, which can be combined with all the forms of embodiment described here, the vegetable oil can be a vegetable oil for food uses, that is, a vegetable fat for food uses made for example from nuts and oily seeds or from other parts of a plant, such as the flowering tops, flowers, leaves, fruit, roots and rhizomes. In possible implementations, the vegetable oil can be chosen from a group comprising hemp seed oil, safflower oil, coconut oil, rapeseed oil, Copaiba oil, jatropha oil, jojoba oil, linseed oil, macadamia oil, nut oil, argan oil, hypericum oil, olive oil, palm oil, double-fractionated palm oil, refined palm oil, ricin oil, rice oil, peanut seed oil, sunflower seed oil, corn seed oil, sesame seed oil, soya seed oil, grapeseed oil or mixtures of two or more of the above. According to a possible form of embodiment, the vegetable oil comprises sunflower seed oil and rice oil. In some implementations, the vegetable oil consists only of sunflower seed oil and rice oil.

Moreover, according to other forms of embodiment described here, the vegetable oil used for the short-crust pastry dough has no palm oil, double-fractionated palm oil or refined palm oil.

Furthermore, according to other forms of embodiment described here, the short-crust pastry dough has no hydrogenated fats.

In some forms of embodiment, which can be combined with all the forms of embodiment described here, the short-crust pastry dough can have a ratio in weight between vegetable fibers, vegetable oil and water of 1:4:4, that is, one part vegetable fibers, 4 parts of vegetable oil and 4 parts of water.

In the present description, the quantity in weight and % w/w of water and fat phase, in particular vegetable oil, are understood to be provided by the ingredients themselves, and not as contained in other ingredients of the recipe for the dough, such as for example eggs which, although in fact able to provide water and fat phase in the recipe, do not contribute to the quantities of water and fat phase as expressed above, in particular vegetable oil.

In some forms of embodiment, which can be combined with all the forms of embodiment described here, the short-crust pastry dough can include sugar. In some forms of embodiment, the sugar can be comprised between 12% and 20% w/w with respect to the weight of the short-crust pastry dough, in particular between 13% and 19% w/w, more in particular between 14% and 18% w/w. Examples of quantities of sugar in the short-crust pastry dough are 14% w/w, 14.5% w/w, 15% w/w, 15.5% w/w, 16% w/w, 16.5% w/w, 17% w/w, 17.5% w/w, 18% w/w, 18.5% w/w, 19% w/w. These quantities of sugars are intended to be a low content of sugar in the dough and in the final bakery product. In some forms of embodiment, the sugar can be sugar from sugar beet, or from sugar cane. In possible implementations, the sugar can be caster sugar or icing sugar.

In some forms of embodiment, which can be combined with all the forms of embodiment described here, the short-crust pastry dough can include eggs, in particular whole eggs. In some forms of embodiment, the eggs can be comprised between 10% and 18% w/w with respect to the weight of the short-crust pastry dough, in particular between 11% and 16% w/w, more in particular between 12% and 15% w/w. Examples of quantities of eggs in the short-crust pastry dough are 12% w/w, 12.5% w/w, 13% w/w, 13.5% w/w, 14% w/w, 14.5% w/w, 15% w/w, 15.5% w/w, 16% w/w, 16.5% w/w, 17% w/w. In some forms of embodiment, the eggs can be whole eggs, in particular whole fresh eggs, or a mixture or blend of pasteurized fresh eggs.

It is believed that water and fat phase are also provided to the dough by the whole eggs, which also confer organoleptic characteristics to the final bakery product, such as a golden color and taste.

In some forms of embodiment, which can be combined with all the forms of embodiment described here, the short-crust pastry dough includes salt (NaCl), that is, cooking salt, for example sea salt, coarse or fine. In some forms of embodiment, the salt can be comprised between 0.05% and 0.25% w/w with respect to the weight of the short-crust pastry dough, in particular between 0.075% and 0.2% w/w, more in particular between 0.1% and 0.175% w/w. Examples of quantities of salt in the short-crust pastry dough are 0.125% w/w, 0.13% w/w, 0.135% w/w, 0.14% w/w, 0.145% w/w, 0.15% w/w, 0.155% w/w, 0.16% w/w, 0165% w/w, 0.17% w/w.

In some forms of embodiment, which can be combined with all the forms of embodiment described here, the short-crust pastry dough can include one or more leavening agents, or chemical yeast. For example chemical leavening agents can be used. In some forms of embodiment, the one or more leavening agents can be comprised between 0.05% and 0.25% w/w with respect to the weight of the short-crust pastry dough, in particular between 0.075% and 0.2% w/w, more in particular between 0.1% and 0.175% w/w. Examples of quantities of the one or more leavening agents in the short-crust pastry dough are 0.125% w/w, 0.13% w/w, 0.135% w/w, 0.14% w/w, 0.145% w/w, 0.15% w/w, 0.155% w/w, 0.16% w/w, 0.165% w/w, 0.17% w/w.

In some forms of embodiment, which can be combined with all the forms of embodiment described here, the short-crust pastry dough also includes one or more natural aromas. In some forms of embodiment, the one or more natural aromas can be comprised between 0.025% and 0.2% w/w with respect to the weight of the short-crust pastry dough, in particular between 0.05% and 0.175% w/w, more in particular between 0.075% and 0.15% w/w. Examples of quantities of the one or more natural aromas in the short-crust pastry dough are 0.08% w/w, 0.085% w/w, 0.09% w/w, 0.095% w/w, 0.1% w/w, 0.12% w/w, 0.125% w/w, 0.13% w/w.

In some forms of embodiment, which can be combined with all the forms of embodiment described here, the short-crust pastry dough can consist exclusively of:
- one or more vegetable fibers, in particular legume fiber, potato fiber, millet fiber and linseed fiber;
- gluten-free starch and/or cereal flour, in particular cornstarch, potato starch and rice flour;
- water;
- fat phase, in particular vegetable oil, more in particular sunflower seed oil and rice oil;
- sugar;
- eggs;
- one or more chemical leavening agents;
- natural aromas (optional).

In some forms of embodiment, the short-crust pastry dough according to the present description, and the bakery products obtained with it, are not only gluten-free and lacking in structuring and/or reticulating chemical additives, but can also be without milk, lactose or milk derivatives and consequently are suitable not only for celiac sufferers but also for those who are not able to digest lactose or in general suffer from intolerance to milk, lactose or milk derivatives.

In particular, according to some forms of embodiment described here, the short-crust pastry dough is lactose-free. In some forms of embodiment, the gluten-free bakery product obtained from the short-crust pastry dough according to the present description can be a sweet snack, a savory snack, a biscuit, a cake.

In some forms of embodiment, the gluten-free bakery product obtained from the short-crust pastry dough according to the present description can comprise, or be filled with, fruit jam, and/or chocolate cream and/or nut cream and/or honey cream. In particular, with the short-crust pastry dough according to the possible forms of embodiment described here it is possible to make snacks based on gluten-free short-crust pastry, and possibly also without lactose or milk derivatives, with fillings based on fruit jam, and/or chocolate cream and/or nut cream, in particular spreadable cream, or honey cream.

According to a variant, the fruit jam that can be used in the filling comprises pectin resistant to high temperatures, that is, at least the cooking temperature of the bakery products in question, usually between 150°C and 200°C, in particular between 175°C and 190°C, for example about 180-185°C.

According to another variant, the cream that can be used in the filling is a hydrate-based cream, that is, a hydrated cream, which allows to obtain a very soft final filling, preventing the filling from becoming excessively hard.

Advantageously, moreover, thanks to the special formula described here, the short-crust pastry dough according to the invention has structural and reticulation characteristics that allow to retain inside it the possible filling.

Furthermore, with the short-crust pastry dough according to the possible forms of embodiment described here, it is possible to make biscuits with gluten-free short-crust pastry and without structuring and/or reticulating chemical additives, and possibly also without lactose or milk derivatives, in different tastes and flavors.

Advantageously, moreover, the bakery products obtainable according to the present description have values of free water or water activity less than about 0.6, in particular less than or equal to 0.55, more in particular less than or equal to 0.52, for example comprised between 0.48 and 0.52.

Forms of embodiment described here concern a method to make a gluten-free bakery product. The method according to the present invention provides to make a dough for short-crust pastry without sources of gluten and without reticulating and/or structuring chemical additives which comprises:
- a mixture of vegetable fibers, between 3% and 10% with respect to the weight of the short-crust pastry dough, wherein said vegetable fibers are chosen from two or more of legume fiber, potato fiber, millet fiber and linseed fiber;
- a mixture of cornstarch, potato starch and rice flour;
- water;
- fat phase consisting of vegetable oil.

According to one form of embodiment, the method provides to make a pre-mixture comprising at least said fat phase consisting of vegetable oil, a part of said one or more vegetable fibers, water;
- to subsequently add said pre-mixture to the remaining ingredients, to obtain said short-crust pastry dough,
- to shape said short-crust pastry dough,
- to bake said shaped short-crust pastry dough to achieve said bakery product.

According to a variant, the method provides to use eggs in the dough, said eggs being used at least in said pre-mixture. Advantageously, the eggs are used to incorporate the ingredients of the pre-mixture.

According to another variant, the method provides to obtain said pre-mixture by high-speed emulsification, to advantageously obtain an emulsifying gel.

Advantageously, making the pre-mixture as described above allows to obtain the reticulation of the short-crust pastry dough, since it allows the synergic reticulation action of the vegetable fibers present in the pre-mixture with the other ingredients in the dough.

Advantageously, in some forms of embodiment, the fat phase, preferably vegetable oil, more preferably sunflower seed oil and rice oil, water and the one or more vegetable fibers, form a natural emulsifying gel which is propaedeutic to obtaining the desired natural reticulation of the dough and is moreover advantageously able to replace the palm oil in the recipe.

Advantageously, according to a variant, at least part or all the legume fiber is used in the pre-mixture. According to another variant the vegetable fiber used in the pre-mixture is only part or all a legume fiber.

According to another form of embodiment, the method provides to:
- mix at least said one or more vegetable fibers and said mixture of cornstarch, potato starch and rice flour and subsequently add and knead at least water and fat phase consisting of vegetable oil to obtain said short-crust pastry dough,
- shape said short-crust pastry dough,
- bake said shaped short-crust pastry dough, to make said bakery product.

Advantageously, in the forms of embodiment described here, the optimum kneading time for transferring a correct quantity of mechanical energy and obtaining a plastic and well-reticulated dough goes from 5 to 60 minutes, in particular from 7 to 45 minutes.

In some forms of embodiment, the eggs and sugar can be added and kneaded together with the water and the fat phase.

In some forms of embodiment, the one or more leavening agents, the salt and the natural aromas can be mixed together with the one or more vegetable fibers and the gluten-free starch and cereal flour.

According to all the forms of embodiment described here, it is believed that having substituted soft wheat or wheat flour, which is a source of gluten and commonly used in the short-crust pastry doughs in question, with the mixture of cornstarch, potato starch and rice flour and vegetable fibers indicated above, allows to obtain a short-crust pastry dough and a final product that are gluten-free, which have the rheological and organoleptic characteristics of a traditional bakery product containing gluten, but are suitable for celiac sufferers and without needing to use structuring and/or reticulating chemical additives. In particular, gluten-free bakery products according to the present description have satisfactory properties in terms of sensory qualities, taste, palatability and texture.

In particular, without being constrained to theory, we believe that the hydration dynamics of the vegetable fibers used, advantageously legume fiber, potato fiber, millet fiber and linseed fiber, taken individually or in a mixture, which are able to absorb from 6-7 times and up to 10 times, in some cases up to 13-14 times their own weight in water, allows to create a stable gel in different heat conditions (hot or cold), even extreme. In particular, these vegetable fibers allow to retain the water in the bakery products, increasing their shelf-life.

Furthermore, the vegetable fibers used, for example in a mixture of several vegetable fibers as described above, possess an emulsifying power that allows to form emulsions in which no syneresis occurs, that is, separation or breakage of the emulsion.

This feature, in particular in the advantageous proportional ratios of 1:4:4 as described above, is very important to facilitate rolling, working and cutting the raw dough and hence to obtain final gluten-free bakery products that are comparable in quality with bakery products containing gluten, without needing to use structuring and/or reticulating chemical additives.

### EXAMPLES

### EXAMPLE 1

100 kg of a short-crust pastry dough are prepared according to the present description, containing the following quantities, expressed as absolute values and as % w/w with respect to the weight of the short-crust pastry dough:
- vegetable fibers 6 kg, 6% w/w;
- potato starch 10 kg, 10% w/w;
- cornstarch 19 kg, 19% w/w;
- sea salt 0.15 kg, 0.15% w/w;
- rice flour 12 kg, 12% w/w;
- water 9 kg, 9% w/w;
- sunflower seed oil 13.6 kg, 13.6% w/w;
- icing sugar 16 kg, 16% w/w;
- pasteurized fresh egg mix 14 kg, 14% w/w;
- chemical yeast 0.15 kg, 0.15% w/w;
- natural aromas 0.1 kg, 0.1% w/w.

The composition of the vegetable fibers is as follows: legume fiber 42% w/w, potato fiber 28% w/w, millet fiber 18% w/w, linseed oil fiber 12% w/w, expressed as % w/w with respect to the weight of the vegetable fibers.

To prepare the dough as indicated above, the powders are mixed (vegetable fibers, potato starch, cornstarch, sea salt, rice flour, chemical yeast and natural aromas) in a spiral mixer, and the liquids are then added (water, sunflower seed oil and pasteurized fresh egg mix), and the icing sugar together with the liquids.

The dough thus obtained is used for example to obtain, after cooking, sweet snacks, with or without filling, or savory snacks or biscuits with a short-crust pastry base.

### EXAMPLE 2

100 kg of a short-crust pastry dough according to the present description are prepared as in Example 1, with the difference that to prepare the dough, first of all a pre-mixture is made of sunflower seed oil, a part of the vegetable fibers and water and subsequently the remaining part of vegetable fibers, potato starch, cornstarch, sea salt, rice flour, chemical yeast and natural aromas are added, in a spiral mixer, and then the pasteurized fresh egg mix, possibly more water and the icing sugar are added.

### EXAMPLE 3

100 kg of a short-crust pastry dough according to the present description are prepared as in Example 2, with the difference that as well as the sunflower seed oil, the rice oil is also used in the pre-mixture, with the provision that the total quantity of fat phase consisting of vegetable oil in the dough is always 13.6 kg, 13.6% w/w.

### EXAMPLE 4

100 kg of a short-crust pastry dough according to the present description are prepared as in Example 2, with the difference that the pasteurized fresh egg mix is added to the pre-mixture.

### EXAMPLE 5

100 kg of a short-crust pastry dough according to the present description are prepared as in Example 4, with the difference that the rice oil is used in the pre-mixture as in Example 3, as well as the sunflower seed oil.

### EXAMPLE 6

100 kg of a short-crust pastry dough according to the present description are prepared as in Example 1, with the difference that the sunflower seed oil is replaced by the refined palm oil.

### EXPERIMENTAL DATA

Applicant has carried out experiments to evaluate the risk of microbe or bacterial development in bakery products according to the present description, snacks or biscuits, based on short-crust pastry dough without filling, and bakery products, snacks or biscuits, based on short-crust pastry dough with filling.

In particular, the quantity A_{w} (free water or water activity), defined as the ratio between tension of water vapor above the food and tension of the water at the same temperature, was measured. For the water, therefore, A_{w}=1, that is, all the water is free, whereas for A_{w}<1, part of the water in the food is bound or retained, and part is free.

The quantity A_{w} provides an indication of the water actually available for the growth of bacteria, and the water bound/retained by the bakery product and is therefore used in the calculation of growth of microorganisms in the food. It is known that no microorganism is able to develop in substrates or food with A_{w} less than about 0.6.

In order to measure A_{w}, it is possible for example to use the bench instrument HygroLab Cl, or the portable instrument HygroPalm HP23-AW-A, both equipped with HC2 probes to measure A_{w}, humidity and temperature, available from the Italian Company Rotronic Italia S.r.l.. As provided by the measuring protocol, the measurement was made twice and, as a result, the average of the values obtained was taken into consideration.

The measurements made by Applicant thus gave the following results:
- bakery product without filling (only baked short-crust pastry): A_{w} = 0.484;
- finished bakery product complete with short-crust pastry and with a fruit filling: A_{w} = 0.513.

Consequently, the bakery products, both only baked short-crust pastry and also filled, obtained with the short-crust pastry dough according to the present description, have A_{w} values abundantly below the limit value (A_{w} = 0.6) beyond which some microorganism can develop. Therefore, the bakery products according to the present description have an increased shelf-life, without being attacked by bacteria, yeasts, molds, spores or microorganisms in general.

It is clear that modifications and/or additions of parts and/or steps may be made to the gluten-free bakery product, the dough to make said bakery product and the corresponding method of production as described heretofore, without departing from the field and scope of the present invention.

It is also clear that, although the present invention has been described with reference to some specific examples, a person of skill in the art shall certainly be able to achieve many other equivalent forms of gluten-free bakery product, the dough to make said bakery product and the corresponding method of production, having the characteristics as set forth in the claims and hence all coming within the field of protection defined thereby.

## Claims

1. Gluten-free bakery product obtained from a dough for short-crust pastry, said short-crust pastry dough being without sources of gluten and without reticulating and/or structuring chemical additives and comprising:
- a mixture of vegetable fibers, between 3% and 10% with respect to the weight of the short-crust pastry dough, wherein said vegetable fibers are chosen from two or more of legume fiber, potato fiber, millet fiber and linseed fiber;
- a mixture of cornstarch, potato starch and rice flour;
- water;
- fat phase consisting of vegetable oil.

2. Bakery product as in claim 1, wherein said dough comprises all said vegetable fibers and wherein the legume fiber is comprised between 35% and 45% w/w with respect to the weight of a mixture of vegetable fibers, the potato fiber is comprised between 25% and 35% w/w with respect to the weight of a mixture of vegetable fibers, the millet fiber is comprised between 15% and 25% w/w with respect to the weight of a mixture of vegetable fibers and the linseed fiber is comprised between 5% and 15% w/w with respect to the weight of a mixture of vegetable fibers.

3. Bakery product as in claim 1 or 2, wherein the cornstarch, the potato starch and the rice flour are comprised overall between 35% and 40% w/w with respect to the weight of the short-crust pastry dough.

4. Bakery product as in any claim hereinbefore, wherein the cornstarch is comprised between 15% and 25% w/w with respect to the weight of the short-crust pastry dough, the potato flour is comprised between 5% and 15% w/w with respect to the weight of the short-crust pastry dough and the rice flour is comprised between 7% and 18% w/w with respect to the weight of the short-crust pastry dough.

5. Bakery product as in any claim hereinbefore, wherein the water is comprised between 5% and 15% w/w with respect to the weight of the short-crust pastry dough.

6. Bakery product as in any claim hereinbefore, wherein the vegetable oil is comprised between 9% and 18% w/w with respect to the weight of the short-crust pastry dough.

7. Bakery product as in any claim hereinbefore, wherein the short-crust pastry dough has a ratio in weight between vegetable fibers, vegetable oil and water of 1:4:4.

8. Bakery product as in any claim hereinbefore, wherein said short-crust pastry dough comprises sugar, comprised between 12% and 20% w/w with respect to the weight of the short-crust pastry dough.

9. Bakery product as in any claim hereinbefore, wherein said short-crust pastry dough comprises eggs, comprised between 10% and 18% w/w with respect to the weight of the short-crust pastry dough.

10. Short-crust pastry dough to make gluten-free bakery products, said dough being without sources of gluten and without reticulating and/or structuring chemical additives and comprising:
- a mixture of vegetable fibers, between 3% and 10% with respect to the weight of the short-crust pastry dough, wherein said vegetable fibers are chosen from two or more of legume fiber, potato fiber, millet fiber and linseed fiber;
- a mixture of cornstarch, potato starch and rice flour;
- water;
- fat phase consisting of vegetable oil.

11. Method to make a gluten-free bakery product, said method providing to make a dough for short-crust pastry without sources of gluten and without reticulating and/or structuring chemical additives which comprises:
- a mixture of vegetable fibers, between 3% and 10% with respect to the weight of the short-crust pastry dough, wherein said vegetable fibers are chosen from two or more of legume fiber, potato fiber, millet fiber and linseed fiber;
- a mixture of cornstarch, potato starch and rice flour;
- water;
- fat phase consisting of vegetable oil.
said method also providing:
- to shape said short-crust pastry dough,
- to bake said shaped short-crust pastry dough to achieve said bakery product.

12. Method as in claim 11, said method providing to:
- make a pre-mixture comprising at least said fat phase consisting of vegetable oil, one part of said one or more vegetable fibers and water;
- subsequently add said pre-mixture to the remaining ingredients, to obtain said short-crust pastry dough,
- shape said short-crust pastry dough,
- bake said shaped short-crust pastry dough, to make said bakery product.

13. Method as in claim 12, said method providing to use eggs in the dough, said eggs being used at least in said pre-mixture.

14. Method as in claim 12 or 13, said method providing to obtain said pre-mixture by means of high-speed emulsification.

15. Method as in claim 11, said method providing at least to:
- mix at least said one or more vegetable fibers and said mixture of cornstarch, potato starch and rice flour and subsequently add and knead in at least water and fat phase consisting of vegetable oil to obtain said short-crust pastry dough,
- shape said short-crust pastry dough,
- bake said shaped short-crust pastry dough, to make said bakery product.
